(19) Europäisches Patentamt

European Patent Office

Office européen des brevets

(11) **EP 4 712 307 A1**

(12) **EUROPEAN PATENT APPLICATION**

(43) Date of publication:
**18.03.2026 Bulletin 2026/12**

(21) Application number: **24199882.2**

(22) Date of filing: **11.09.2024**

(51) International Patent Classification (IPC):
*H02J 50/12* (2016.01)     *B60L 53/12* (2019.01)
*H02M 7/48* (2007.01)

(52) Cooperative Patent Classification (CPC):
**H02J 50/12; B60L 53/12; H02M 1/0054;
H02M 1/007; H02M 3/335; H02M 7/219;** H02J 7/42;
H02J 7/933; H02J 2105/37

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **WiTricity AI Tech, LLC
Midway, GA 31320 (US)**

(72) Inventor: **LE, Nam Hoai
Midway, 31320 (US)**

(74) Representative: **HG Law International LLP
26-28 Bedford Row
London WC1R 4HE (GB)**

(54) **SEQUENCE ALTERNATION IN FULL-BRIDGE CONVERTERS**

(57)     Converter circuitry for a wireless power system is disclosed. The converter circuitry includes first and second switch legs each comprising two switches, wherein each switch is configured to transition between an on state and an off state. A controller is configured to control the states of the switches by alternating between a first switch sequence and a second switch sequence, wherein the controller successively alternates between the first switch sequence and the second switch sequence during a conversion period. The first switch sequence defines a first pattern of on states of the first, second, third, and fourth switches of the first and second legs, and the second switch sequence defines a second pattern of on states of the first, second, third, and fourth switches, wherein the second pattern is different than the first pattern.

EP 4 712 307 A1

**Description**

Background

Wireless power transfer (WPT) systems can include one or more wireless power transmitters configured to transmit power to one or more wireless power receivers via an oscillating electromagnetic field. Wireless power receivers can be coupled to one or more batteries such that the received power is used to charge the batteries. Wireless power systems can be configured to power various electronic devices (e.g., phones, laptops, medical devices, vehicles, robots, etc.).

WPT for charging electric vehicles is described in detail in patents such as U.S. Patents 8,933,594, titled "Wireless energy transfer for vehicles," and 9,561,730, titled "Wireless power transmission in electric vehicles," which are incorporated here by reference in their entirety. More specifically, these patents refer to inductive WPT between a ground-based unit of a wireless charging station and a vehicle-based unit, herein also simply referred to as the ground unit or ground assembly and the vehicle unit or vehicle assembly, respectively.

Efficient and regulatory compliant WPT for electric vehicles requires a WPT coil in the vehicle unit to be aligned with a WPT coil in the ground unit within a specified tolerance zone. Some standards specify a tolerance zone of +/- 75 mm in x-direction (vehicle longitudinal axis) and +/- 100 mm in y-direction (vehicle lateral axis). Therefore, one aspect of WPT for charging electric vehicles to be addressed is assisting a user or an autonomous driving system to park and align the vehicle within the relatively tight tolerance zone sometimes also referred to as "charging spot". Such park assist systems may also include guidance of the user or the autonomous driving system in steering the vehicle towards the ground unit.

A further aspect of WPT for electric vehicle charging is establishing wireless communications between the vehicle and the wireless charging station the vehicle is attempting to use for charging. Standard compliant WPT for electric vehicles requires the wireless charging station to communicate with the vehicle via a wireless communication network for purposes of WPT system control and other WPT-related functions (e.g., for the safety of the system). This communication is based on WiFi IEEE 802.11x using standardized protocols enabling interoperability. Establishing wireless communications may be particularly difficult in a parking facility with multiple wireless charging stations at which multiple EVs may be attempting to park at the same time. It is necessary to disambiguate the connections - that is, make sure that each vehicle is in communication with the wireless charging station it is attempting to use for charging, and not another e.g., neighboring station. This disambiguation is part of a process referred to as pairing and shall ensure that a wireless communication node (e.g., a WiFi client) associated to the vehicle communicates with a wireless communication node (e.g., a WiFi access point) associated to the right wireless charging station.

Summary

WPT systems typically use electromagnetic fields to transmit electrical energy between a wireless power transmitter and a wireless power receiver, without the need for a physical connection. In order to properly transfer power from the transmitter to the receiver, and in order to properly charge a connected battery or power a connected device, the wireless power transmitter and/or receiver may include one or more switching legs that enable the system to convert between AC and DC power, from one voltage to another, and/or otherwise enable the system to operate effectively.

In one example, a wireless power receiver includes a full bridge converter having first and second switching legs, enabling the receiver to convert received AC power into DC power to charge a battery or power an electronic device. The first and second switching legs are controlled to operate according to a given switch sequence (e.g., turning one or more switches of each leg on or off in sequence ), enabling the receiver to rectify the received AC power into usable DC power. In order to convert the received signal into a desired usable signal, depending on the particular sequence employed, the wireless power receiver may operate at one of two levels. These levels may be labeled level 0 and level 1, for example. At level 0, the switches of the first and second switch legs may be set to respective on or off states such that no current is sent to or taken from a connected battery. At level 1, the switches of the first and second switch legs may be set to respective on or off states such that current is sent to or taken from the battery. Note that there are multiple different combinations of switches being turned on or off that will result in the system operating at either level 0 or level 1. And by controlling the switches to turn on or off in a particular sequence, the relative duration over which the system operates at level 0 vs. level 1 can be controlled. In this manner, the system can control the amount of current that is sent to or taken from the battery.

However, depending on the particular sequence that is used, one or more components (e.g., switches of the first switch leg and/or second switch leg) may experience different operating conditions, thereby creating an imbalance in the system. This imbalance can cause several issues, such as higher core loss (e.g., lower efficiency), imbalanced switching loss and/or conduction loss between the switches, and/or an overall imbalance in heating and operational requirements for one or more of the switches (which may cause issues with thermal properties). Further, to design a system that effectively operates using a particular switching sequence, one or more switches may have different operational requirements, and as such, designing these systems may be more complicated and expensive. Additionally, due to the nature of the system, only certain switching sequences are possible, meaning there are trade-offs with respect to the selection of any given sequence. For example, selection of a first sequence may alleviate one issue while exacerbating a second issue (e.g., achieving balanced conduction loss for each switch while creating an imbalance in switching loss), and selection of a second sequence may alleviate the second issue at the expense of exacerbating the first issue (e.g., achieving balanced switching loss for each switch, while creating an imbalance in conduction loss).

With these issues in mind, examples of the present disclosure mitigate the imbalances between switches in the first and second switching legs by causing the system to alternate between two sequences. That is, by selecting two different switching sequences which may each individually introduce imbalanced switching and/or conduction losses, examples of the present disclosure cause the system to alternate between the first sequence and the second sequence thereby creating a more balanced overall system. Several benefits result from the selection of alternating sequences. For example, by alternating between a first sequence and a second sequence, the switching loss and conduction loss experienced at each switch in the first and second switch legs may be balanced. Alternating between two sequences as described herein enables the current passing through the switches within the switch legs to be balanced over time, thereby ensuring that no single switch experiences a significantly higher switching loss and/or conduction loss than the others. Without alternating sequences, one or more switches may be switched more often than the others, and/or may be controlled to switch when experiencing a higher current than the others, resulting in imbalanced switching and/or conduction losses between the switches over time.

Another benefit of alternating between two switching sequences may include that common mode core loss may be reduced. Core loss is a function of the common mode voltage and frequency, which each depend on the particular sequence that is used. By alternating between two sequences, the common mode frequency can be reduced, thereby reducing the core loss, and improving overall efficiency of the system as compared to each sequence individually.

One example of the present disclosure includes converter circuitry for a wireless power system. The converter circuitry comprises a first switch leg comprising a first switch and a second switch, each configured to transition between an on state and an off state, and a second switch leg comprising a third switch and a fourth switch, each configured to transition between the on state and an off state. The converter circuitry also includes a controller configured to control the states of the first, second, third, and fourth switches by alternating between a first switch sequence and a second switch sequence, wherein the controller successively alternates between the first switch sequence and the second switch sequence during a conversion period; the first switch sequence defines a first pattern of on states of the first, second, third, and fourth switches; and the second switch sequence defines a second pattern of on states of the first, second, third, and fourth switches, wherein the second pattern is different than the first pattern.

In some examples, the first switch sequence defines the on states of the switches during a first switch period and the second switch sequence defines the on states of the switches for a second switch period. The first switch period may be substantially the same as the second switch period. Furthermore, in some examples, the on state durations of the fourth switch during the first switch period are controlled to be inversely proportional to the on state durations of the second switch during the second switch period.

In some embodiments, the first switch leg is configured to transition between: a first arrangement in which the first switch is in the on state and the second switch is in the off state; and a second arrangement in which the first switch is in the off state and the second switch is in the on state. Additionally, the second switch leg is configured to transition between: a third arrangement in which the third switch is in the on state and the fourth switch is in the off state; and a fourth arrangement in which the third switch is in the off state and the fourth switch is in the on state.

In some examples, the first switch sequence comprises first, second, third, and fourth durations. During the first duration, the controller controls the first switch leg to operate in the second arrangement and the second switch leg to operate in the fourth arrangement. During the second duration, the controller controls the first switch leg to operate in the first arrangement and the second switch leg to operate in the fourth arrangement. During the third duration, the controller controls the first switch leg to operate in the second arrangement and the second switch leg to operate in the fourth arrangement. And during the fourth duration, the controller controls the first switch leg to operate in the second arrangement and the second switch leg to operate in the third arrangement. The second duration may immediately follow the first duration, the third duration may immediately follow the second duration, and the fourth duration may immediately follow the third duration.

In some examples, the second switch sequence comprises fifth, sixth, seventh, and eighth durations. During the fifth duration, the controller controls the first switch leg to operate in the first arrangement and the second switch leg to operate in the third arrangement. During the sixth duration, the controller controls the first switch leg to operate in the first arrangement and the second switch leg to operate in the fourth arrangement. During the seventh duration, the controller controls the first switch leg to operate in the first arrangement and the second switch leg to operate in the third arrangement. And during the eighth duration, the controller controls the first switch leg to operate in the second arrangement and the second switch leg to operate in the third arrangement. The sixth duration may immediately follow the fifth duration, the seventh duration may immediately follow the sixth duration, and the eighth duration may immediately follow the seventh duration.

In some examples, the switches may each be a field effect transistor. Additionally, the converter circuitry may be a full-bridge converter. Furthermore, the converter circuitry may comprise a transformer connected between the first switch leg and the second switch leg.

In another example a method of controlling converter circuitry is disclosed. The converter circuitry may comprise a first switch leg comprising a first switch and a second switch each configured to transition between an on state and an off state, a second switch leg comprising a third switch and a fourth switch each configured to transition between the on state and the off state, and a controller configured to control the states of the switches. The method may comprise successively alternating between a first switch sequence and a second switch sequence during a conversion period, wherein: the first switch sequence defines a first pattern of on states of the first, second, third, and fourth switches, and the second switch sequence defines a second pattern of on states of the first, second, third, and fourth switches, wherein the second pattern is different than the first pattern.

In some examples, a wireless power transfer system for charging a vehicle is described. The wireless power transfer system comprises a ground assembly, a vehicle assembly, and control circuitry. The control circuitry is configured to control at least one of the ground assembly or the vehicle assembly, and comprises: a first switch leg comprising a first switch and a second switch, each configured to transition between an on state and an off state; a second switch leg comprising a third switch and a fourth switch, each configured to transition between the on state and an off state; and a controller configured to control the states of the first, second, third, and fourth switches by alternating between a first switch sequence and a second switch sequence, wherein: the controller successively alternates between the first switch sequence and the second switch sequence during a conversion period; the first switch sequence defines a first pattern of on states of the first, second, third, and fourth switches; and the second switch sequence defines a second pattern of on states of the first, second, third, and fourth switches, wherein the second pattern is different than the first pattern.

In some examples, a vehicle assembly for a wireless power transfer system is described. The vehicle assembly comprises: a first switch leg comprising a first switch and a second switch, each configured to transition between an on state and an off state; a second switch leg comprising a third switch and a fourth switch, each configured to transition between the on state and an off state; and a controller. The controller is configured to control the states of the first, second, third, and fourth switches by alternating between a first switch sequence and a second switch sequence, wherein: the controller successively alternates between the first switch sequence and the second switch sequence during a conversion period; the first switch sequence defines a first pattern of on states of the first, second, third, and fourth switches; and the second switch sequence defines a second pattern of on states of the first, second, third, and fourth switches, wherein the second pattern is different than the first pattern.

In some examples, a ground assembly for a wireless power transfer system is described. The ground assembly comprises: a first switch leg comprising a first switch and a second switch, each configured to transition between an on state and an off state; a second switch leg comprising a third switch and a fourth switch, each configured to transition between the on state and an off state; and a controller. The controller is configured to control the states of the first, second, third, and fourth switches by alternating between a first switch sequence and a second switch sequence, wherein: the controller successively alternates between the first switch sequence and the second switch sequence during a conversion period; the first switch sequence defines a first pattern of on states of the first, second, third, and fourth switches; and the second switch sequence defines a second pattern of on states of the first, second, third, and fourth switches, wherein the second pattern is different than the first pattern.

Brief Description of the Drawings

The above and other objects and advantages of the disclosure will be apparent upon consideration of the following detailed description, taken in conjunction with the accompanying drawings, in which:

FIGS. 1A-C illustrate simplified block diagrams of example wireless power transfer systems, in accordance with some embodiments of the present disclosure;
FIG. 1D illustrates a hierarchical block diagram of an example wireless power transfer system for wireless electric vehicle charging, in accordance with some embodiments of the disclosure;
FIG. 2 example circuitry of a portion of wireless power receiver, in accordance with some embodiments of the present disclosure;
FIGS. 3A-B illustrate example configurations of the switch legs of the receiver of FIG. 2, in accordance with some embodiments of the present disclosure;
FIG. 4 illustrates a graph of an example switch sequence, in accordance with some embodiments of the present disclosure;
FIG. 5 illustrates a graph of four different example switch sequences, in accordance with some embodiments of the present disclosure;
FIG. 6 illustrates a table showing the relative effect on switching loss, conduction loss, and core loss, for each of the four switch sequences of FIG. 5, in accordance with some embodiments of the present disclosure;

FIG. 7 illustrates a graph showing the relative core loss patterns for each of the four switch sequences of FIG. 5, in accordance with some embodiments of the present disclosure.

FIG. 8 illustrates an example parking facility with multiple wireless charging stations for use by electric vehicles in accordance with systems and methods of the present disclosure.

Detailed Description

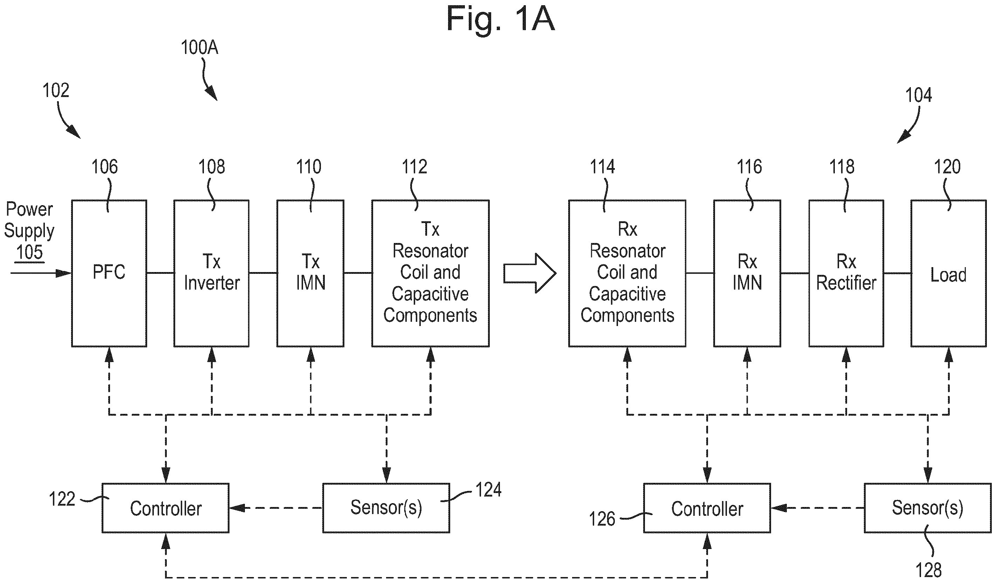

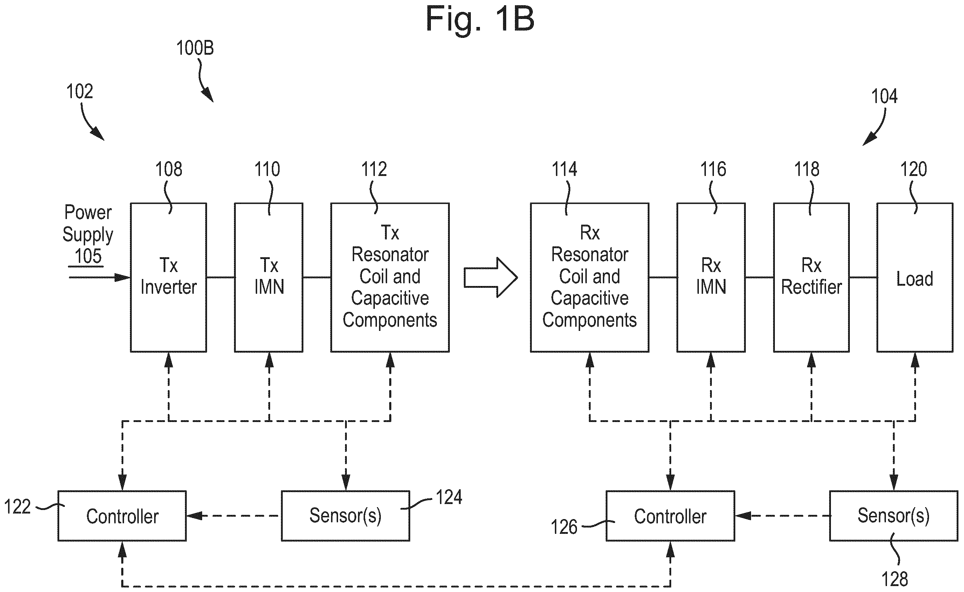

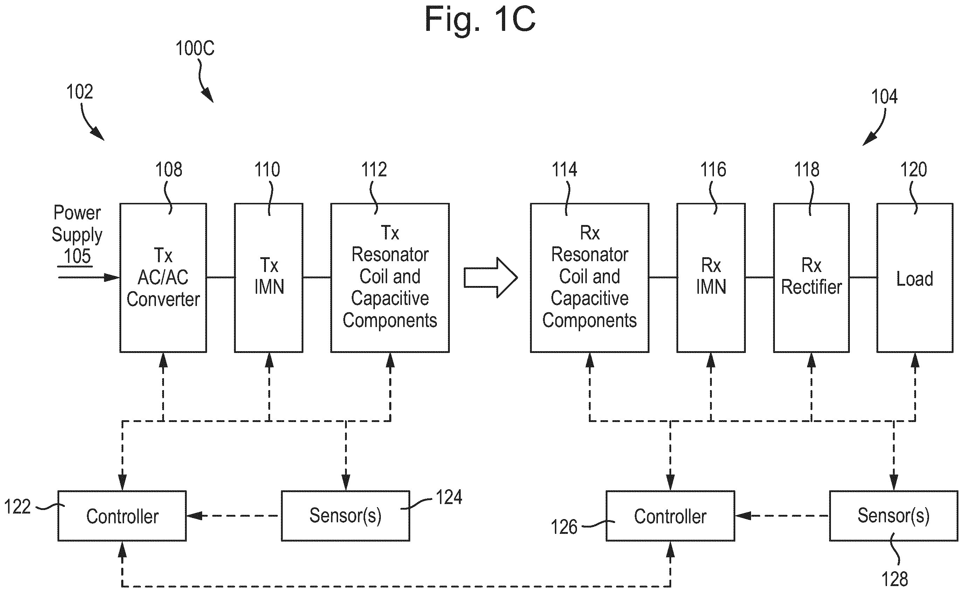

FIGS. 1A-C illustrate block diagrams of example wireless power systems 100A-C. FIG. 1A illustrates a system 100A including an AC power supply 105 coupled to a power factor correction circuit 106. FIG. 1B illustrates a system 100B including a connection from the DC power supply 105 to an inverter, bypassing a power factor correction circuit. And FIG. 1C illustrates a system 100C in which the AC power supply 105 is coupled to an AC/AC converter. Systems 100A, 100B, and 100C may share one or more components or features, as shown in the respective figures. Each system 100A-C includes a wireless power transmitter 102 and a wireless power receiver 104. In transmitter 102, a power supply 105 (e.g., AC mains, battery, etc.) provides power to an inverter 108 (or AC/AC converter, as in FIG. 1C). Additional components can include power factor correction (PFC) circuit 106 before the inverter/converter stage 108. The inverter/converter 108 drives the transmitter resonator coil and capacitive components 112 ("resonator"), via an impedance matching network 110 (including fixed or tunable network components). The resonator 112 produces an oscillating magnetic field which induces a current or voltage in receiver resonator 114. The received energy is provided to a rectifier 118 via impedance matching network 116 (including fixed or tunable network components). Ultimately, the rectified power is provided to a load 120 (e.g., one or more batteries of an electric or hybrid vehicle). In some embodiments, the battery voltage level can impact various parameters (e.g., impedance) of the wireless power system 100. Therefore, the battery voltage level may be received, determined, or measured to be provided as input to other portions of the wireless power system 100. For example, typical battery voltage ranges for electric vehicles include 280V-420V, etc.

In some embodiments, one or more components of the transmitter 102 and receiver 104 can be coupled to transmitter controller 122 or receiver controller 126, respectively, which may each include a communication module (e.g., Wi-Fi, radio, Bluetooth, in-band signaling mechanism, etc.). In some embodiments, one or more components of the transmitter 102 and receiver 104 can be coupled to one or more sensors 124, 128 (e.g., current sensor(s), voltage sensor(s), power sensor(s), temperature sensor(s), fault sensor(s), etc.). The controllers 122, 126 and sensor(s) 124, 128 can be operably coupled to control portions of the transmitter 102 and receiver 104 based on feedback signals from the sensor(s) 124, 128.

In some embodiments, the exemplary impedance matching networks 110, 116 can include one or more variable impedance components. The one or more variable impedance components may be referred together herein as a "tunable matching network" (TMN). TMNs can be used in adjusting the impedance (e.g., including the reactance) of the wireless power transmitter 102 and receiver 104. In some embodiments, tunable matching network(s) may be referred to as "tunable reactance circuit(s)". In some applications, e.g., wireless power transmission, impedances seen by the wireless power transmitter 102 and receiver 104 may vary dynamically. In such applications, impedance matching between a receiver resonator coil (of 114) and a load 120, and a transmitter resonator coil (of 112) and the inverter 108, may be required to prevent unnecessary energy losses and excess heat.

High-power wireless power transmitters can be configured to transmit wireless power in applications such as powering or charging batteries of vehicles, industrial machines, robots, or electronic devices relying on high power. For the purpose of illustration, the following disclosure focuses on wireless power transmission for vehicles (e.g., electric vehicles, hybrid vehicles, etc.). However, it is understood that any one or more of the embodiments described herein can be applied to other applications in which wireless power can be used.

As discussed herein, a wireless power transmitter (e.g., wireless power transmitter 102) or at least a portion of a wireless power transmitter may be referred to as a "ground assembly" or "GA." Likewise, a wireless power receiver (e.g., wireless power receiver 104) or at least a portion of a wireless power receiver may be referred to as a "vehicle assembly" or "VA."

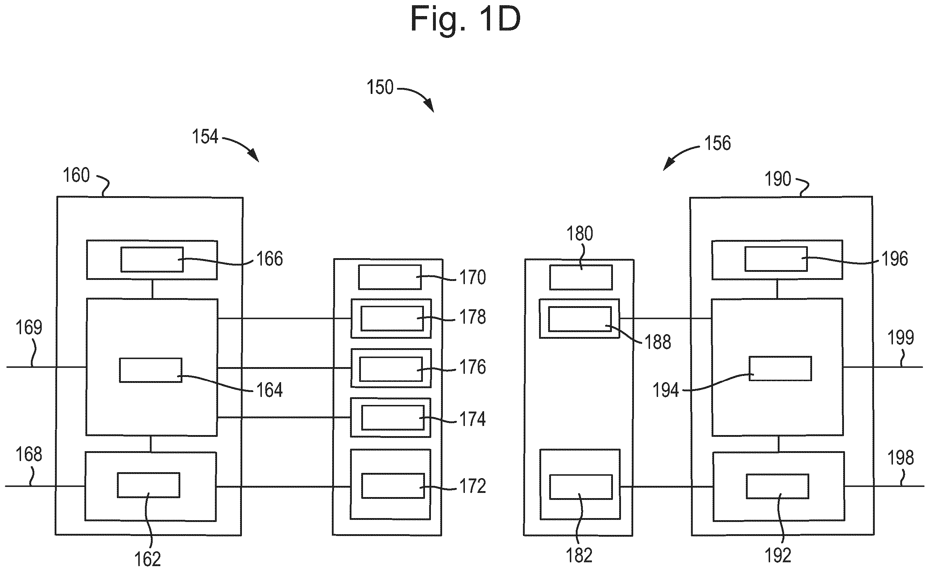

FIG. 1D is a hierarchical block diagram of an example WPT system 150 for wireless electric vehicle charging. At the top hierarchy level, the system 150 comprises a GA 154 and a VA 156. The next lower level shows the GA 154 composed of a GA power conversion & control unit 160 and a WPT ground unit 170, and various connections between these blocks. Splitting the GA into two blocks implies implementations where the GA power conversion & control unit and the ground unit are physically separated and interconnected via a several meters long multiwire cable herein referred to as GA feeder cable (not shown). However, it should not exclude implementations where the GA power conversion & control unit is entirely or partially integrated in the ground unit forming one physical unit with a common housing (not shown).

At the third level, the GA power conversion & control unit includes a GA power converter 162, a GA controller 164, and a GA wireless communication unit 166. The ground unit 170 integrates a GA WPT coil 172 as well as various functions as needed for Foreign Object Detection (FOD), Living Object Detection (LOD), Vehicle Detection (VD), and Position Detection (PD). In the example of FIG. 1D, these functions are provided by a FOD unit 174, a LOD unit 176, and a GA PD unit 178, each configured and connected to the GA controller for exchanging data and control. In some implementations, these functions share or partially share one common hardware platform referred to as a multi-purpose detection system.

In an implementation conforming with the SAE standard, the GA wireless communication unit 166 is a WiFi Access Point providing an air interface to a Wireless Local Area Network (WLAN) of a parking facility. Certain parking facilities provide a central WiFi access point associated to multiple GAs. In such implementations, the GA wireless communication unit 166 is external to the GA 154. In another implementation, the GA wireless communication unit is integral part of the ground unit 170.

The GA WPT coil 172 may include a tuning & impedance matching network (not shown) forming a resonant circuit and the ground-unit is referred to as the GAR as previously mentioned. In other implementations, the tuning & impedance matching network or parts thereof are included in the GA power converter 162. Further, the GA controller 164 interfaces to the GA power converter 162 and the GA wireless communication unit 166 for data exchange and system control. It also provides a data interface 169 (e.g., Ethernet) to communicate with a system external entity e.g., via a backbone network. Moreover, the GA power converter 162 disposes a power interface 168 for feeding or receiving AC or DC power.

At the second level, FIG. 1D shows the VA 156 composed of a WPT vehicle unit 180 connected to a VA power conversion & control unit 190. At a third level, the VA power conversion & control unit 190 comprises a VA power converter 192, a VA controller 194, and a VA wireless communication unit 196. The vehicle unit 180 comprises a VA WPT coil 182 and a VA PD unit 188, the vehicle-side counterpart of the GA PD unit 178 interfacing with the VA controller for data exchange and control. Splitting the VA into two blocks implies implementations where the VA power conversion & control unit and the vehicle unit are physically separated and interconnected via a multiwire cable herein referred to as VA feeder cable (not shown). However, this should not exclude implementations where the VA power conversion & control unit 190 is entirely or partially integrated in the vehicle unit 180 forming one physical unit with a common housing (not shown).

In a standard-conforming implementation, the VA wireless communication unit 196 is a WiFi Client. As with the GA wireless communication unit, the VA wireless communication unit may be external to the VA 156, e.g., mounted anywhere on the vehicle or parts or it may be partially or fully integrated into the vehicle unit.

In some implementations, the VA WPT coil 182 includes a tuning & impedance matching network (not shown) forming a resonant circuit and the vehicle unit is referred to as the VAR as previously mentioned. Further, the VA controller interfaces to the VA power converter and the VA wireless communication unit for data exchange and control. It also provides a line communication interface 199, e.g., a CAN bus interface to communicate with an external vehicle onboard entity. Moreover, the VA power converter disposes a power interface 198 for feeding or receiving DC power.

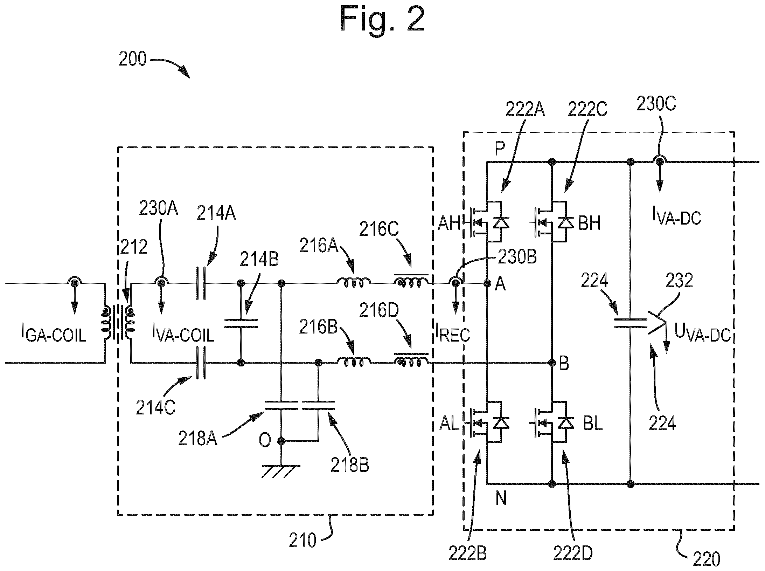

FIG. 2 illustrates and example schematic diagram 200 of a portion of a wireless power receiver, such as receiver 104, in accordance with some embodiments. Diagram 200 may illustrate filter circuity 210 and converter circuitry 220. The receiver 200 may also include a receiver controller (not shown), which may receive signals from one or more sensors (e.g., to measure various receiver voltages and currents) as well as control the state of one or more switches of the converter circuitry 220.

In the illustrated embodiment of FIG. 2, the filter circuitry 210 may include a receiver coil 212. The receiver coil 212 may be coupled with a corresponding coil of the transmitter (e.g., transmitter 102) in order to receive power from the transmitter. The filter circuitry 210 may also include one or more other components such as differential mode capacitors 214A-C, differential mode inductors 216A-B, common choke 216C-D, and common mode capacitors 218A-B, which may enable the received signal from the coil 212 to be filtered and converted into a more desirable form for use by the load or connected battery.

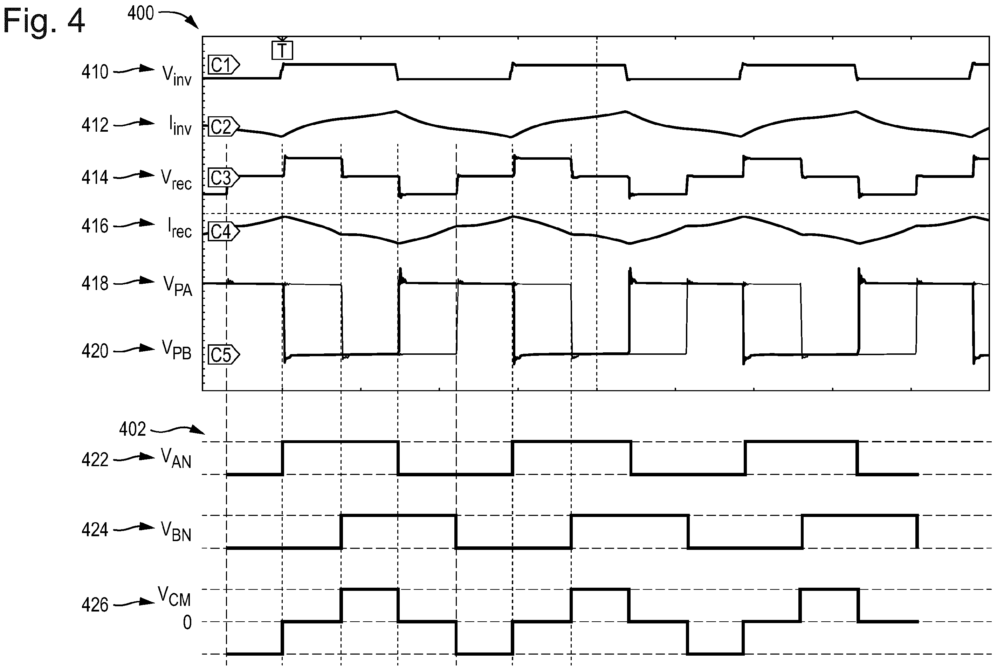

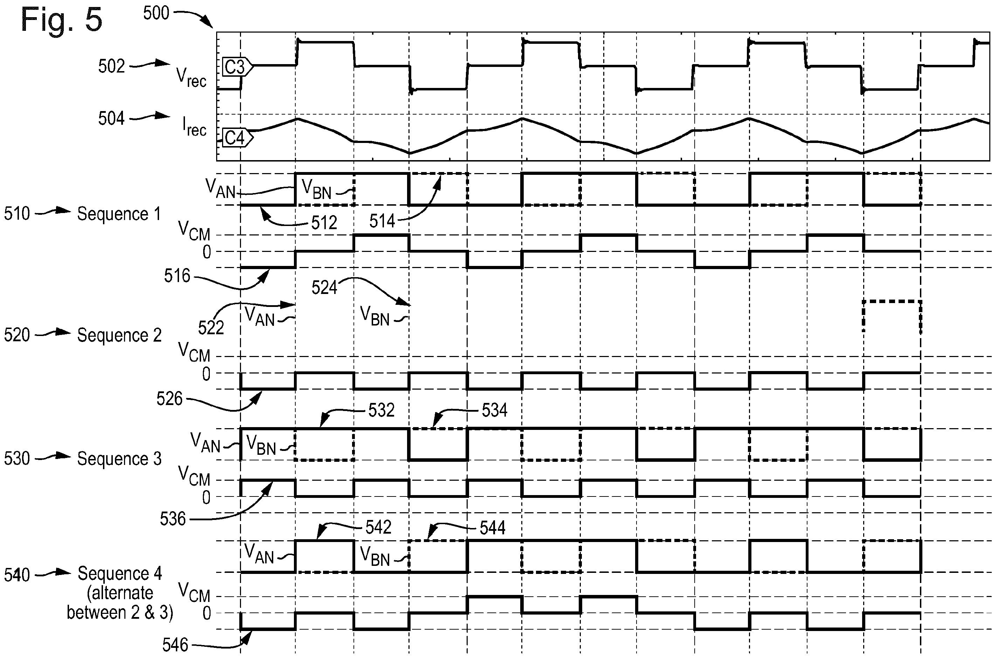

The converter circuitry 220 may include a plurality of switches 222A-D. Each switch 222A-D, which may be a power transistor such as a metal oxide semiconductor field effect transistor (MOSFET), may be configured to transition between an on state and an off state, controlled by the receiver controller. The switches 222A (also referred to as A high) and 222B (also referred to as A low) may form a switch leg A, and switches 222C (also referred to as B high) and 222D (also referred to as B low) may form switch leg B. Switch legs A and B may operate (e.g., controlled by the receiver controller) to convert the signal from the filter circuitry 210 into a signal usable by the load (e.g., device 112), which may be coupled to the output of the receiver. Switch legs A and B may also be controlled according to one or more switch sequences, as described in further detail below, particularly with respect to FIGS. 4 and 5.

The converter circuitry 220 may also include a capacitor 224. The capacitor 224, in combination with the switches 222A-D, may operate to create a full-bridge converter that converts an input signal from the filter circuitry 210 into a usable signal for the load (e.g., AC/DC conversion). The receiver controller may control the on/-off states of the switches 222A-D using a pulse-width-modulation (PWM) approach in order to achieve the desired output. In some examples, the switching may be controlled based on the detected zero-crossing of a signal in the receiver. The receiver controller may also control the timing of switching of the switches 222A-D between their respective on and off states in order to synchronize with the transmitter.

The receiver may also include one or more sensors configured to perform current and voltage measurement at various point within the circuitry. For instance, sensors may be configured to measure current at points 230A (e.g., current at the receiver coil), 230B (e.g., current in the receiver), and 230C (current at the output), and measure voltage at point 232 (voltage at the output). Other sensor positioning is possible as well. The sensor data may be used by the receiver controller for various purposes such as, for example, to regulate the charging current, to ramp up and ramp down power smoothly, to operate the system in a low power mode if applicable, to emit a low power (beacon) signal that can be used to assist with alignment of the transmitter and receiver, and other tuning and testing purposes.

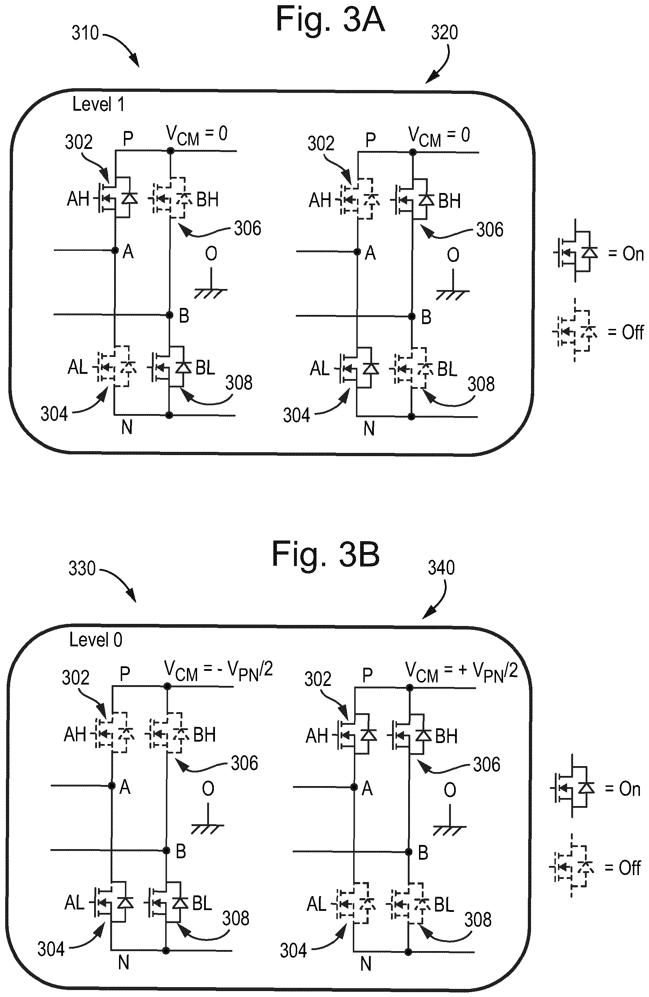

FIGS. 3A and 3B illustrate example configurations 310, 320, 330, and 340 of the states of the switches of switch legs A and B of the receiver 200 of FIG. 2. In each configuration, the on/off states of the switches of switch leg A and switch leg B may each be in a particular arrangement, wherein each arrangement includes a combination of states of the two respective switches of that leg. For example, leg A may be in a first arrangement or a second arrangement. In the first arrangement of leg A, switch 302 (e.g., AH) is in the on state, and switch 304 (e.g., AL) is in the off state. In the second arrangement of leg A, switch 302 (e.g., AH) is in the off state, and switch 304 (e.g., AL) is in the on state. In both the first and second arrangements of leg A, only one of the two switches is in the on state, while the other switch is in the off state. Similarly, leg B may be in a third arrangement or a fourth arrangement. In the third arrangement of leg B, switch 306 (e.g., BH) is in the on state, and switch 308 (e.g., BL) is in the off state. In the fourth arrangement of leg B, switch 306 (e.g., BH) is in the off state, and switch 308 (e.g., BL) is in the on state. In both the third and fourth arrangements of leg B, only one of the two switches is in the on state, while the other switch is in the off state. The receiver controller controls power transfer and conversion by controlling the combination of arrangements of leg A and leg B within the receiver.

The receiver controller controls the receiver to operate in either level 0 or level 1, depending on the particular arrangements of switch states that are used. In level 1, the receiver enables power to be transferred to or from the battery or connected load device. In level 0, the energy circulated within the receiver, and no power is transferred to or from the battery or connected load device. By controlling the duration of time the receiver spends in level 1 and level 0, the receiver can dictate the amount of power transferred to or from the battery or connected load device.

Level 1 includes two different possible configurations, including a first configuration 310 and a second configuration 320. In the first configuration 310, the controller controls leg A to be in first arrangement (e.g., switch 302 on and switch 304 off), and controls leg B to be in the fourth arrangement (e.g., switch 306 off and switch 308 on). In the second configuration 320, the controller controls leg A to be in the second arrangement (e.g., switch 302 off and switch 304 on), and controls leg B to be in the third arrangement (e.g., switch 306 on and switch 308 off). Both the first configuration 310 and the second configuration 320 enable power to transfer from the receiver coil into the battery or connected load device. The controller may select configuration 310 or configuration 320 based on the polarity of the current signal from the filter circuitry (e.g., filter circuitry 210), which indicates whether the current signal is positive or negative.

Level 0 includes two different possible configurations, including a third configuration 330 and a fourth configuration 340. In the third configuration 330, the controller controls leg A to be in the second arrangement (e.g., switch 302 off and switch 304 on), and controls leg B to be in the fourth arrangement (e.g., switch 306 off and switch 308 on). In the fourth configuration 340, the controller controls leg A to be in the first arrangement (e.g., switch 302 on and switch 304 off), and controls leg B to be in the third arrangement (e.g., switch 306 on and switch 308 off). Both the third configuration 330 and the fourth configuration 340 enable the energy to cycle within the receiver, preventing the transfer of energy to or from a battery or connected load device. Either of configuration 330 or 340 may be used, and the polarity of current may not necessarily dictate which configuration is needed to cycle current within the system (in contrast with the two configurations of level 1).

As indicated above, the receiver controller may alternate between level 0 and level 1 (e.g., the switches of legs A and B may be set such that the receiver alternates between level 0 and level 1). Controlling the relative duration for which the receiver is at level 0 or level 1 dictates the amount of power transferred to or taken from the battery or connected load device. For example, if the receiver is controlled to remain in level 1 indefinitely (e.g., switching from configuration 310 to 320 back and forth aligned with the current signal fluctuations), this may correspond to a 100% duty cycle. Alternatively, if the receiver is controlled to remain in level 0 indefinitely, this may correspond to a 0% duty cycle, wherein no power is transferred to the connected load.

FIG. 4 illustrates a graph of an example switch sequence, in accordance with some embodiments of the present disclosure. The receiver controller may control the switches using one or more different switching sequences to generate asymmetrical or symmetrical waveforms (e.g., waveforms $V_{inv}$, $I_{inv}$, $V_{rec}$, $I_{rec}$, $V_{PA}$, $V_{PB}$, etc.). In some examples, an optimal switching sequence is selected from the plurality of switching sequences based on the inverter type and at least one desired performance characteristic of the inverter.

In the illustrated example of FIG. 4, a first switch sequence 402 is shown. The signals 422 and 424 correspond to the voltages across the switches of the A leg and B leg, and may correspond to the respective arrangements described above with respect to FIG. 3.

In FIG. 4, $V_{inv}$ 410 corresponds to the output voltage of the receiver, seen by the connected load device or battery. $I_{inv}$ 412 corresponds to the output current of the receiver, seen by the connected load device or battery. $V_{rec}$ 414 corresponds to the voltage between point A and point B in FIGS. 2, 3A, or 3B. $V_{rec}$ also corresponds to the value of $V_{AN}$ 422 - $V_{BN}$ 424. $I_{rec}$ 416 corresponds to the current measured at point 230B in FIG. 2. $V_{PA}$ 418 corresponds to the voltage between points P and A in FIGS. 2, 3A, or 3B. $V_{PB}$ 420 corresponds to the voltage between points P and B in FIGS. 2, 3A, or 3B. $V_{AN}$ 422 is the voltage between points A and N in FIGS. 2, 3A, or 3B. $V_{BN}$ 424 is the voltage between points B and N in FIGS. 2, 3A, or 3B. And $V_{CM}$ corresponds to $V_{AN}$ 422 + $V_{BN}$ 424, otherwise known as the common mode voltage.

FIG. 4 illustrates a graph 400 showing a first switching sequence 402. Sequence 402 can be reflected as the combination of voltages $V_{AN}$ 422 and $V_{BN}$ 424, reflected as the common mode voltage $V_{CM}$ 426. To execute sequence 402, the receiver controller may control the switches of leg A and leg B (e.g., switches 222A-D, or 302-308) to produce the appropriate voltages and current flows within the system. Sequence 402 may be understood as a pattern or cycle with four stages. In the first stage, the receiver controller controls the switches to operate in level 0, configuration 330. In the second stage, the receiver controller controls the switches to operate in level 1, configuration 310. In the third stage, the receiver controller controls the switches to operate in level 0, configuration 340. And in the fourth stage, the receiver controller controls the switches to operate in level 1, configuration 320. After the fourth stage, the controller repeats the cycle.

Sequence 402 causes leg A (e.g., switches 302, 304) to switch while experiencing a higher current than the current experienced when leg B (switches 306, 308) is caused to switch. As a result, leg A experiences a higher switching loss than leg B. This may cause faster burnout or degradation of switches of leg A, and/or the switches of leg A may be required to have higher rating or other operational characteristic to account for the imbalance, if sequence 402 is used. Sequence 402 also has a common mode frequency (e.g., the frequency of $V_{CM}$) that matches the operating frequency of the receiver. In some examples, the operating frequency may be 85kHz. Sequence 402 includes only four stages before repeating, which may be the same frequency as the input signal current. As discussed below, the core mode frequency impacts the core loss of the receiver, which impacts the overall efficiency of the system. As noted below with respect to FIG. 5, other sequences or combinations of sequences may have different respective core mode frequencies, and therefore different corresponding core losses.

FIG. 5 illustrates a graph 500 showing four different example switch sequences, in accordance with some embodiments of the present disclosure. In FIG. 5, $V_{rec}$ 502 and $I_{rec}$ 504 may correspond to the voltage and current measured within the receiver. Each of sequences 510, 520, 530, and 540 is illustrated by showing the respective $V_{AN}$ 512, 522, 532, 542 and $V_{BN}$ 514, 524, 534, 544 over time, which correspond to the voltages across switches 304 and 308 respectively for the A leg and the B leg. The respective $V_{CM}$ 516, 526, 536, 546 for each sequence may correspond to the combination of $V_{AN}$ + $V_{BN}$. These voltages may be dictated by the combination of on/off states of the switches 302-308. Each of sequences 510, 520, 530, and 540 may, when executed in a repeated or cyclical manner, individually enable the receiver to transition between level 0 and level 1, and therefore enable power to be transferred to or from the battery or connected load device.

Switch sequence 510 may be similar or identical to switch sequence 402 described with respect to FIG. 4. Sequence 510 includes a four stage pattern, cycle, or series of durations that are repeated. In the first stage or duration, the receiver controller controls the switches to operate in level 0, configuration 330 (e.g., switch 302 off, switch 304 on, switch 306 off, and switch 308 on). In the second stage or duration, the receiver controller controls the switches to operate in level 1, configuration 310 (e.g., switch 302 on, switch 304 off, switch 306 off, and switch 308 on). In the third stage, the receiver controller controls the switches to operate in level 0, configuration 340 (e.g., switch 302 on, switch 304 off, switch 306 on, and switch 308 off). And in the fourth stage, the receiver controller controls the switches to operate in level 1, configuration 320 (e.g., switch 302 off, switch 304 on, switch 306 on, and switch 308 off). After the fourth stage, the controller repeats the cycle again. As can be seen in FIG. 5, $V_{CM}$ 516, or the common mode frequency 516, matches the operating frequency of $V_{rec}$ (e.g., 85kHz).

Switch sequence 520 includes a four stage pattern, cycle, or series of durations that are repeated. In the first stage or duration, the receiver controller controls the switches to operate in level 0, configuration 330 (e.g., switch 302 off, switch 304 on, switch 306 off, and switch 308). In the second stage or duration, the receiver controller controls the switches to operate in level 1, configuration 310 (e.g., switch 302 on, switch 304 off, switch 306 off, and switch 308 on). In the third stage, the receiver controller controls the switches to operate in level 0, configuration 330 again (e.g., switch 302 off, switch 304 on, switch 306 off, and switch 308 on). And in the fourth stage, the receiver controller controls the switches to operate in level 1, configuration 320 (e.g., switch 302 off, switch 304 on, switch 306 on, and switch 308 off). After the fourth stage, the controller repeats the cycle again. As can be seen in FIG. 5, $V_{CM}$ 526, or the common mode frequency 526, is twice the operating frequency of $V_{rec}$ (e.g., 170kHZ for an operating frequency of 85kHz).

Note that for sequence 520, leg A and leg B encounter the same number of switching events during high current and low current of $I_{rec}$ 504 (e.g., "high" and "low" referring to the magnitude of $I_{rec}$ 504). As such, the switching loss experienced by leg A and leg B is balanced for sequence 520, whereas it was unbalanced for sequence 510. However, also note that for sequence 520, the level 0 configuration 340 (e.g., switch 302 on, switch 304 off, switch 306 on, and switch 308 off) is not used during this sequence. That is, even though the duration of time that the receiver spends in level 0 and level 1 is the same as in sequence 510 (e.g., 50%), the switch usage is not balanced. The same level 0 configuration (e.g., configuration 330) is used twice during the four stage cycle of sequence 520. This results in imbalanced use of the switches.

Switch sequence 530 includes a four stage pattern, cycle, or series of durations that are repeated. In the first stage or duration, the receiver controller controls the switches to operate in level 0, configuration 340 (e.g., switch 302 on, switch 304 off, switch 306 on, and switch 308 off). In the second stage or duration, the receiver controller controls the switches to operate in level 1, configuration 310 (e.g., switch 302 on, switch 304 off, switch 306 off, and switch 308 on). In the third stage, the receiver controller controls the switches to operate in level 0, configuration 340 again (e.g., switch 302 on, switch 304 off, switch 306 on, and switch 308 off). And in the fourth stage, the receiver controller controls the switches to operate in level 1, configuration 320 (e.g., switch 302 off, switch 304 on, switch 306 on, and switch 308 off). After the fourth stage, the controller repeats the cycle again. As can be seen in FIG. 5, $V_{CM}$ 536, or the common mode frequency 536, is twice the operating frequency of $V_{rec}$ (e.g., 170kHZ for an operating frequency of 85kHz).

Note that for sequence 530, leg A and leg B encounter the same number of switching events during high current and low current of $I_{rec}$ 504 (e.g., "high" and "low" referring to the magnitude of $I_{rec}$ 504). As such, the switching loss experienced by leg A and leg B is balanced for sequence 530, whereas it was unbalanced for sequence 510. However, also note that for sequence 530, the level 0 configuration 330 (e.g., switch 302 off, switch 304 on, switch 306 off, and switch 308 on) is not used during this sequence. That is, even though the duration of time that the receiver spends in level 0 and level 1 is the same as in sequence 510 (e.g., 50%), the switch usage is not balanced. The same level 0 configuration (e.g., configuration 340) is used twice during the four stage cycle of sequence 530. This results in imbalanced use of the switches.

Switch sequence 540 is a combination of sequences 520 and 530, repeated back to back. During sequence 540, the receiver controller controls the switches to follow the pattern of sequence 520 for a first period (e.g., the first four stages), and to follow the pattern of sequence 530 for a second period (e.g., the next four stages). Switch sequence 540 is illustrated by showing $V_{AN}$ 542 and $V_{BN}$ 544, which correspond to the voltages across switches 304 and 308 respectively for leg A and leg B. These voltages are dictated by the combination of switches 302-208 being on or off.

Switch sequence 540 includes eight stages or durations. In the first stage or duration, the receiver controller controls the switches to operate in level 0, configuration 330 (e.g., switch 302 off, switch 304 on, switch 306 off, and switch 308). In the second stage or duration, the receiver controller controls the switches to operate in level 1, configuration 310 (e.g., switch 302 on, switch 304 off, switch 306 off, and switch 308 on). In the third stage, the receiver controller controls the switches to operate in level 0, configuration 330 again (e.g., switch 302 off, switch 304 on, switch 306 off, and switch 308 on). And in the fourth stage, the receiver controller controls the switches to operate in level 1, configuration 320 (e.g., switch 302 off, switch 304 on, switch 306 on, and switch 308 off). In the fifth stage or duration, the receiver controller controls the switches to operate in level 0, configuration 340 (e.g., switch 302 on, switch 304 off, switch 306 on, and switch 308 off). In the sixth stage or duration, the receiver controller controls the switches to operate in level 1, configuration 310 again (e.g., switch 302 on, switch 304 off, switch 306 off, and switch 308 on). In the seventh stage, the receiver controller controls the switches to operate in level 0, configuration 340 again (e.g., switch 302 on, switch 304 off, switch 306 on, and switch 308 off). And in the eighth stage, the receiver controller controls the switches to operate in level 1, configuration 320 again (e.g., switch 302 off, switch 304 on, switch 306 on, and switch 308 off). After completing the eighth stage, the sequence may repeat.

Note that for sequence 540, leg A and leg B encounter the same number of switching events during high current and low current of $I_{rec}$ 504 (e.g., "high" and "low" referring to the magnitude of $I_{rec}$ 504). As such, the switching loss experienced by leg A and leg B is balanced for sequence 540, whereas it was unbalanced for sequence 510. Additionally, note that during the eight stage sequence of sequence 540, the receiver operates in each of the four configurations 310, 320, 330, and 340 twice during the eight stage sequence. As such, the use of the switches in the receiver is balanced. Further, $V_{CM}$ 546 illustrates that the common mode frequency is half of the operating frequency (e.g., 42.5kHZ for an operating frequency of 85kHz). This results in a lower core loss than for other sequences.

Sequence 540 shown in FIG 5 illustrates that the on state duration of switch 308 during the first switch period (e.g., the first-fourth stages in which switch 308 is on, on, on, and off respectively) is controlled to be inversely proportional to the on state duration of switch 304 during the second switch period (e.g., the fifth-eighth stages in which switch 304 is off, off, off, and on respectively).

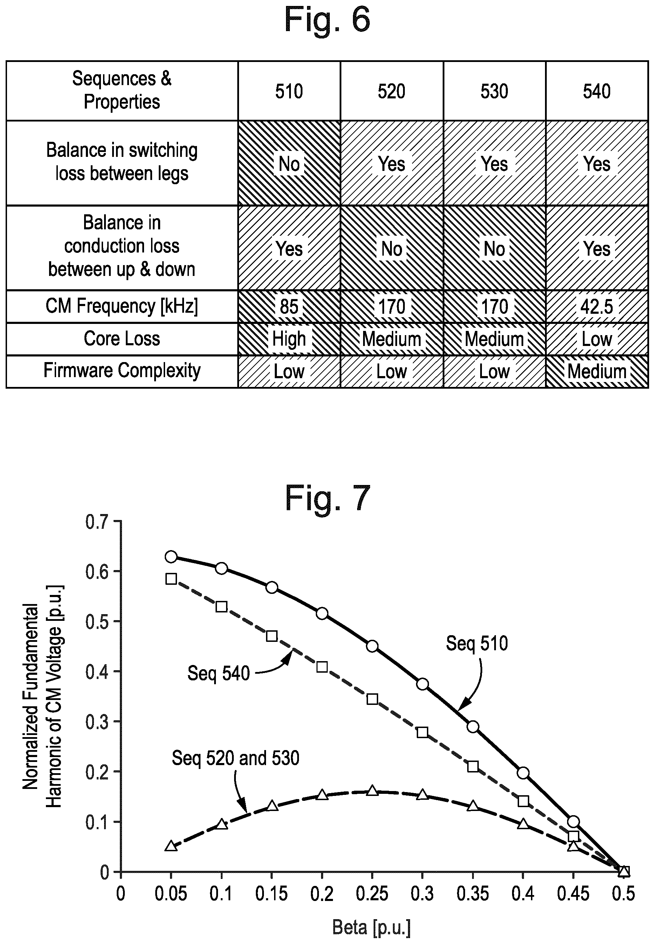

FIG. 6 illustrates a table showing the relative effect on switching loss, conduction loss, and core loss, for each of the four switch sequences of FIG. 5, according to some embodiments of the present disclosure.

Switching loss for a switch is based on the amount of current (and voltage) experienced by the switch during the act of switching from one state to another. For sequence 510, the switching loss between legs A and B is imbalanced, while it is balanced for sequences 520, 530, and 540. With respect to sequence 510, leg A always switches at a high current (e.g., high magnitude) while leg B always switches at a low current (e.g., low magnitude). Leg A therefore experiences higher switching loss than leg B for sequence 510. In contrast, legs A and B each switch at both high and low current for sequences 520, 530, and 540, and therefore have balanced switching loss between the legs.

Conduction loss is similar to the loss that occurs in a resistor when current flows through it, but with respect to a switch. As such, for a given switch (e.g., switches 222A-D or 302-308) the conduction loss is higher when the switch experiences a higher current than when that switch experiences a lower current. Sequences 510 and 540 each include cycling through each configuration of level 1 and level 0 evenly (e.g., configurations 310, 320, 330, and 340 are used evenly during the sequence), thereby balancing the conduction loss across all of the switches. In contrast, sequences 520 and 530 each operate by cycling through only one arrangement of level 0 (e.g., either configuration 330 or configuration 340), and therefore cause an imbalance in conduction loss between the switches.

As noted above for each sequence, the common mode frequency for a given sequence corresponds to the frequency of $V_{CM}$ for that sequence. In sequence 510, the frequency of $V_{CM}$ 516 is the operating frequency (e.g., 85kHz). For sequences 520 and 530, the frequency of $V_{CM}$ 526 and 536 respectively is twice the operating frequency (e.g., 170kHz). And for sequence 540, the frequency of $V_{CM}$ 546 is half the operating frequency (e.g., 42.5 kHz).

Core loss may be understood as a function of the $V_{CM}$ amplitude and frequency. The higher the $V_{CM}$ amplitude is, the higher the core loss becomes. Similarly, the higher the $V_{CM}$ frequency is, the higher the core loss becomes as well. As illustrated in FIG. 5, the relative amplitudes of the respective $V_{CM}$ waveforms 516, 526, 536, and 546 are 100%, 50%, 50%, and 100%. That is, the amplitude of $V_{CM}$ 526 and 536 is half the amplitude of $V_{CM}$ 516 and 546. Additionally, the relative frequencies of the $V_{CM}$ waveforms 516, 526, 536, and 546 are 100%, 200%, 200%, and 50%. That is, the frequency of $V_{CM}$ 526 and 536 is twice the amplitude of $V_{CM}$ 516, and the frequency of $V_{CM}$ 546 is half that of $V_{CM}$ 516. As a result, sequence 540 has less core loss as compared to sequences 510, 520, and 530. An example formula for estimating core loss is:

$$P_d \cong K \times f^\alpha \hat{B}^\beta$$

where K is the coefficient dependent on the core material, f is the $V_{CM}$ frequency and $\hat{B}^\beta$ is the flux density, which is proportional to the $V_{CM}$ amplitude.

Firmware complexity may refer to the relative complexity of the receiver controller required to carry out the sequence. For sequences 510, 520, and 530, the complexity is low because each sequence follows a four stage repeating pattern. For sequence 540, the relative complexity is higher because the receiver controller must switch between sequences 520 and 530, thereby creating an eight stage repeating pattern.

FIG. 7 illustrates a graph showing the relative core loss patterns for each of the four switch sequences of FIG. 5, in accordance with some embodiments of the present disclosure. In FIG. 7, the horizontal axis represents the value of beta, which corresponds to the relative duration that the receiver spends at level 1 (e.g., transferring power to or from the connected load). A beta value of 0 corresponds to no time spent at level 1. A beta value of 0.5 corresponds to 100% of the time spent at level 1. A beta value of 0.25 corresponds to a 50/50 split of time spent between level 0 and level 1. Each of the graphs of FIGS. 4 and 5 are illustrated for a beta value of 0.25. In FIG. 7, the vertical axis corresponds to the normalized fundamental harmonic of the common mode voltage.

As noted above, core loss may be a function of the $V_{CM}$ amplitude and frequency. The higher the amplitude and/or frequency are, the higher the core loss becomes. In sequences 510 and 540, when beta is high, $V_{CM}$ is small. This results in less core loss. When beta is low, $V_{CM}$ is high, which results in higher core loss.

With respect to winding loss, an approximation of winding loss is that the higher the beta value is, the more power (or current) is sent to or taken from the battery. Therefore, when beta is low, there is less power sent to or taken from the battery, resulting in less current flowing through the winding of the core, and winding loss. When the beta value is 0.25 (45 degrees), there is still some power sent to or taken from the battery, meaning the winding loss may still be relatively high.

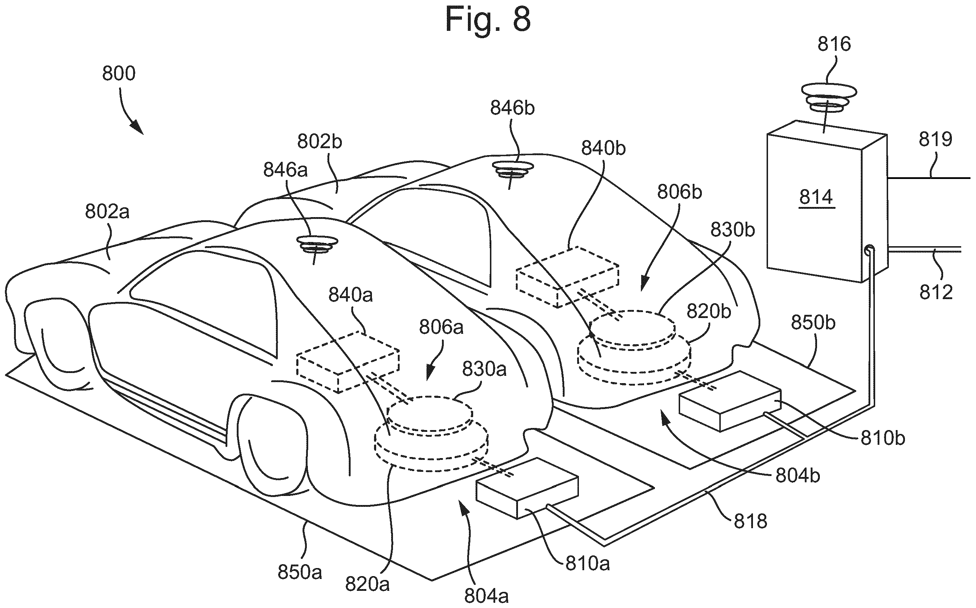

FIG. 8 illustrates an example of a parking facility 800 providing wireless charging services in parking spots 850a and 850b, including a plurality of WPT systems suitable for use in systems and methods of the present disclosure. Two wireless charging-enabled vehicles, 802a, 802b integrating WPT vehicle units 830a, 830b are each parked over a WPT ground unit, 820a, 820b. Both vehicle unit and ground unit include a WPT coil (not shown) sometimes also referred to as an induction coil configured to wirelessly transfer power based on the Faraday induction principle. Both vehicle unit and ground unit also include respective portions of a position detection system. In some implementations, the ground units are surface mounted on the floor. In other implementations, the ground units are flush mount with the floor or buried in the ground (e.g., in the asphalt). The power converters 810a, 810b convert power received by WPT vehicle units 830a, 830b to a form suitable for charging the vehicle's traction battery (not shown). In some examples and as described in U.S. Patent US 9,561,730 B2, the power converters 840a, 840b may be integrated with power converters used for plug-in charging of the vehicle, commonly called on-board chargers (OBC), or other on-board vehicle components. The WPT ground units 820a, 820b are shown linked to external power converters 810a, 810b, each connected to a power supply bus 818. In some implementations, the power converters 810a, 810b are configured and mounted as a "wall box". In other implementations, the power converters or parts thereof are integrated into the WPT ground units. The power supply bus 818 is in turn connected to a central power distribution unit 814. In some implementations and operations, the central power distribution unit receives power from a power utility 812 sometimes referred to as "power grid" and provides DC power to the bus 818, and the power converters 810a, 810b are inverters, such as the multi-level inverter described in provisional U.S. Application 18/486,830, filed October 13, 2023, and incorporated here by reference. The power converters 810a, 810b, provide low-frequency (LF) power signals, such as the 85 kHz signals used for WPT according to the SAE J2954 standard, to the WPT ground units 820a, 820b, to turn into LF magnetic fields for WPT. In other examples, the power distribution unit 814 provides the LF signals directly to each WPT ground unit, and power converters 810a, 810b are simpler or not present. In yet other examples, the power distribution unit 814 and bus 818 are not present, and the power converters 810a, 810b are each connected directly to the power utility 812 and convert AC power from the utility to LF power for wireless power transfer. The combination of a WPT ground unit (e.g., 820a), a power converter (e.g., 810a), and any other ground-side electronics (not shown) constitutes a wireless charging station (e.g., 804a) as indicated in FIG. 8. In some cases, the WPT ground units 820a, 820b are also referred to as Ground Assembly Resonators (GAR) or ground assembly pads, and the wireless charging station is also referred to as a Ground Assembly (GA) or Electric Vehicle Supply Equipment (EVSE). Analogously, the WPT vehicle units 830a, 830b are sometimes referred to as Vehicle Assembly Resonators (VAR) or vehicle assembly pads and the combination of a WPT vehicle unit (e.g., 830a) and a power converter (e.g., 840a) and any other vehicle-side electronics (not shown) constitutes a Vehicle Assembly (VA) (e.g., 806a, 806b). Each of the power connections shown may be bi-directional, allowing the vehicles to discharge power from their batteries to the power utility 812 in a vehicle-to-grid (V2G), or other load in a vehicle-to-home (V2H), vehicle-to-vehicle (V2V) or similar arrangement (generally V2X).

FIG. 8 also illustrates vehicles 802a, 802b, and power distribution unit 814 providing wireless communication units 846a, 846b, and 816, respectively. The wireless communication unit 816 may be configured to wirelessly communicate with the vehicles 802a and 802b e.g., based on a Wi-Fi IEEE 802.1 1x standard. In SAE standard conformant wireless charging systems, this communication is used for exchanging data between the GA and VA for purposes of WPT control and safety. Further, the power distribution unit 814 provides an interface 819 configured to communicate with external entities (e.g., a charging operation center) via a communication backhaul (not shown). This backhaul may rely on radio communications (e.g., via communication unit 816), power line communications (e.g., via power utility 812), or any other line communications including fiber optical. In the example parking facility 800, wireless communication unit 816 is configured to serve multiple vehicles. In other parking facilities, each of the wireless charging stations 804a, 804b provide a wireless communication unit (not shown) configured to communicate with the respective vehicles 802a, 802b.

Beside the WPT coil, the WPT ground units 820a, 820b or the WPT vehicle units 830a, 830b, or both may include various sensors and detection systems (not shown). For example, they may include systems for detecting a positional relationship between the vehicle unit and the ground unit. The positional relationship is needed to guide the vehicle to the charging spot, to mutually align the vehicle-side and groundside WPT coils within the specified tolerance, and for pairing of a vehicle with a wireless charging station as needed to establish communication between the right entities in multiple vehicle multiple charging station scenarios. The ground unit may also include sensors and detection systems to determine presence of a foreign object that has the potential to heat up by induction heating or any hazardous events caused by an incandescent object on the surface of the ground unit. Further, it may include sensors and a detection system for determining presence of a living object e.g., a hand of a person or animals approaching a critical space beneath the vehicle where electromagnetic field exposure exceeds certain limits (e.g., based on IEEE or ICNIRP guidelines). Moreover, the ground unit may include sensors and a detection system for determining a presence of the vehicle or a type of the vehicle. In some implementations, sensors and detection systems or parts thereof may be external to the ground unit or vehicle unit.

The systems, devices, and processes discussed above are intended to be illustrative and not limiting. One skilled in the art would appreciate that the actions of the processes discussed herein may be omitted, modified, combined, and/or rearranged, and any additional actions may be performed without departing from the scope of the invention. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real-time. It should also be noted that the systems and/or methods described above may be applied to, or used in accordance with, other systems and/or methods.

All of the features disclosed in this specification (including any accompanying claims, abstract, and drawings), and/or all of the steps of any method or process so disclosed, may be combined in any combination, except combinations where at least some of such features and/or steps are mutually exclusive.

Each feature disclosed in this specification (including any accompanying claims, abstract, and drawings), may be replaced by alternative features serving the same, equivalent, or similar purpose unless expressly stated otherwise. Thus, unless expressly stated otherwise, each feature disclosed is one example only of a generic series of equivalent or similar features.

Throughout the description and claims of this specification, the words "comprise" and "contain" and variations of them mean "including but not limited to", and they are not intended to (and do not) exclude other moieties, additives, components, integers, or steps. Throughout the description and claims of this specification, the singular encompasses the plural unless the context otherwise requires. In particular, where the indefinite article is used, the specification is to be understood as contemplating plurality as well as singularity, unless the context requires otherwise.

The reader's attention is directed to all papers and documents which are filed concurrently with or previous to this specification in connection with this application and which are open to public inspection with this specification, and the contents of all such papers and documents are incorporated herein by reference.

**Claims**

1. Converter circuitry for a wireless power system, the converter circuitry comprising:

   a first switch leg comprising a first switch and a second switch, each configured to transition between an on state and an off state;
   a second switch leg comprising a third switch and a fourth switch, each configured to transition between the on state and an off state; and
   a controller configured to control the states of the first, second, third, and fourth switches by alternating between a first switch sequence and a second switch sequence, wherein:

   the controller successively alternates between the first switch sequence and the second switch sequence during a conversion period;
   the first switch sequence defines a first pattern of on states of the first, second, third, and fourth switches; and
   the second switch sequence defines a second pattern of on states of the first, second, third, and fourth switches, wherein the second pattern is different than the first pattern.

2. The converter circuitry of claim 1, wherein the first switch sequence defines the on states of the switches during a first switch period and the second switch sequence defines the on states of the switches for a second switch period.

3. The converter circuitry of claim 2, wherein the first switch period is substantially the same as the second switch period.

4. The converter circuitry of claims 2 or 3, wherein the on state durations of the fourth switch during the first switch period are controlled to be inversely proportional to the on state durations of the second switch during the second switch period.

5. The converter circuitry of any of claims 1 to 4, wherein:

   the first switch leg is configured to transition between:

   a first arrangement in which the first switch is in the on state and the second switch is in the off state; and
   a second arrangement in which the first switch is in the off state and the second switch is in the on state; and

   the second switch leg is configured to transition between:

   a third arrangement in which the third switch is in the on state and the fourth switch is in the off state; and
   a fourth arrangement in which the third switch is in the off state and the fourth switch is in the on state.

6. The converter circuitry of claim 5, wherein:

   the first switch sequence comprises first, second, third, and fourth durations;
   during the first duration, the controller controls the first switch leg to operate in the second arrangement and the second switch leg to operate in the fourth arrangement;

during the second duration, the controller controls the first switch leg to operate in the first arrangement and the second switch leg to operate in the fourth arrangement;

during the third duration, the controller controls the first switch leg to operate in the second arrangement and the second switch leg to operate in the fourth arrangement; and

during the fourth duration, the controller controls the first switch leg to operate in the second arrangement and the second switch leg to operate in the third arrangement.

7. The converter circuitry of claim 6, wherein the second duration immediately follows the first duration, the third duration immediately follows the second duration, and the fourth duration immediately follows the third duration.

8. The converter circuitry of any of claims 5 to 7, wherein:

the second switch sequence comprises fifth, sixth, seventh, and eighth durations;

during the fifth duration, the controller controls the first switch leg to operate in the first arrangement and the second switch leg to operate in the third arrangement;

during the sixth duration, the controller controls the first switch leg to operate in the first arrangement and the second switch leg to operate in the fourth arrangement;

during the seventh duration, the controller controls the first switch leg to operate in the first arrangement and the second switch leg to operate in the third arrangement; and

during the eighth duration, the controller controls the first switch leg to operate in the second arrangement and the second switch leg to operate in the third arrangement.

9. The converter circuitry of claim 8, wherein the sixth duration immediately follows the fifth duration, the seventh duration immediately follows the sixth duration, and the eighth duration immediately follows the seventh duration.

10. The converter circuitry of any of claims 1 to 9, wherein the switches are field effect transistors.

11. The converter circuitry of any of claims 1 to 10, wherein the converter circuitry is a full-bridge converter.

12. The converter circuitry of any of claims 1 to 11, wherein the converter circuitry comprises a transformer connected between the first switch leg and the second switch leg.

13. A method of controlling converter circuitry, the converter circuitry comprising a first switch leg comprising a first switch and a second switch each configured to transition between an on state and an off state, a second switch leg comprising a third switch and a fourth switch each configured to transition between the on state and the off state, and a controller configured to control the states, the method comprising:

successively alternating between a first switch sequence and a second switch sequence during a conversion period, wherein:

the first switch sequence defines a first pattern of on states of the first, second, third, and fourth switches; and

the second switch sequence defines a second pattern of on states of the first, second, third, and fourth switches, wherein the second pattern is different than the first pattern.

14. A wireless power transfer system for charging a vehicle, the system comprising:

a ground assembly;
a vehicle assembly; and
control circuitry configured to control at least one of the ground assembly or the vehicle assembly, wherein the control circuitry comprises:

a first switch leg comprising a first switch and a second switch, each configured to transition between an on state and an off state;

a second switch leg comprising a third switch and a fourth switch, each configured to transition between the on state and an off state; and

a controller configured to control the states of the first, second, third, and fourth switches by alternating between a first switch sequence and a second switch sequence, wherein:

the controller successively alternates between the first switch sequence and the second switch sequence during a conversion period;

the first switch sequence defines a first pattern of on states of the first, second, third, and fourth switches; and

the second switch sequence defines a second pattern of on states of the first, second, third, and fourth switches, wherein the second pattern is different than the first pattern.

15. A vehicle assembly for a wireless power transfer system comprising:

a first switch leg comprising a first switch and a second switch, each configured to transition between an on state and an off state; a second switch leg comprising a third switch and a fourth switch, each configured to transition between the on state and an off state; and a controller configured to control the states of the first, second, third, and fourth switches by alternating between a first switch sequence and a second switch sequence, wherein:

the controller successively alternates between the first switch sequence and the second switch sequence during a conversion period; the first switch sequence defines a first pattern of on states of the first, second, third, and fourth switches; and the second switch sequence defines a second pattern of on states of the first, second, third, and fourth switches, wherein the second pattern is different than the first pattern.

16. A ground assembly for a wireless power transfer system comprising:

a first switch leg comprising a first switch and a second switch, each configured to transition between an on state and an off state; a second switch leg comprising a third switch and a fourth switch, each configured to transition between the on state and an off state; and a controller configured to control the states of the first, second, third, and fourth switches by alternating between a first switch sequence and a second switch sequence, wherein:

the controller successively alternates between the first switch sequence and the second switch sequence during a conversion period; the first switch sequence defines a first pattern of on states of the first, second, third, and fourth switches; and the second switch sequence defines a second pattern of on states of the first, second, third, and fourth switches, wherein the second pattern is different than the first pattern.

## Fig. 1A

# Fig. 1B

# Fig. 1C

## Fig. 1D

# Fig. 2

EP 4 712 307 A1

# Fig. 3A

310

320

Level 1

302 P $V_{CM} = 0$

AH

BH

306

A

O

B

AL

BL 308

304

N

302 P $V_{CM} = 0$

AH

BH

306

A

O

B

AL

BL 308

304

N

= On

= Off

# Fig. 3B

330

340

Level 0

302 P $V_{CM} = -V_{PN}/2$

AH

BH

306

A

O

B

AL

BL 308

304

N

302 P $V_{CM} = +V_{PN}/2$

AH

BH

306

A

O

B

AL

BL 308

304

N

= On

= Off

Fig. 4

EP 4 712 307 A1

Fig. 5

500

502 → $V_{rec}$ [C3]

504 → $I_{rec}$ [C4]

510 → Sequence 1

$V_{AN}$ | $V_{BN}$
512
514

$V_{CM}$
0

516

524

520 → Sequence 2

522 | $V_{AN}$ | $V_{BN}$

$V_{CM}$
0

526

532 534

$V_{AN}$ | $V_{BN}$

530 → Sequence 3

$V_{CM}$
0

536

542 544

$V_{AN}$ | $V_{BN}$

540 → Sequence 4
(alternate
between 2 & 3)

$V_{CM}$
0

546

EP 4 712 307 A1

# Fig. 6

| Sequences & Properties | 510 | 520 | 530 | 540 |
|---|---|---|---|---|
| Balance in switching loss between legs | No | Yes | Yes | Yes |
| Balance in conduction loss between up & down | Yes | No | No | Yes |
| CM Frequency [kHz] | 85 | 170 | 170 | 42.5 |
| Core Loss | High | Medium | Medium | Low |
| Firmware Complexity | Low | Low | Low | Medium |

# Fig. 7

# Fig. 8

EP 4 712 307 A1

Europäisches
Patentamt
European
Patent Office
Office européen
des brevets

# EUROPEAN SEARCH REPORT

**Application Number**

EP 24 19 9882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/188397 A1 (WU HUNTER [US] ET AL) 25 July 2013 (2013-07-25) * abstract * * figures 5, 8, 9, 23, 38 * * paragraphs [01088], [0101], [0115] * * paragraphs [0124], [0164] - [0167], [0239], [0242] * * paragraphs [0140], [0149], [0174], [0177] * * paragraphs [0086], [0136], [0137] * ----- | 1-4, 10-16 | INV.<br>H02J50/12<br>B60L53/12<br>H02M7/48 |
| A | CN 116 707 328 A (AVAGO TECHNOLOGIES GENERAL IP) 5 September 2023 (2023-09-05) * abstract * * paragraph [0038] - paragraph [0042] * * figures * ----- | 1-16 | |
| A | US 2008/298087 A1 (MOZIPO AURELIEN T [US] ET AL) 4 December 2008 (2008-12-04) * abstract * * figures * * paragraph [0006]; claims * ----- | 1-16 | TECHNICAL FIELDS SEARCHED (IPC) |
| A | US 2023/198393 A1 (MOHAJERANI ZAHRA [US] ET AL) 22 June 2023 (2023-06-22) * abstract * * figures 2-6 * * paragraph [0047] * ----- | 1-16 | H02J<br>B60L<br>H02M |

The present search report has been drawn up for all claims

| Place of search | Date of completion of the search | Examiner |
|---|---|---|
| Munich | 25 February 2025 | Hurtado-Albir, F |

EPO FORM 1503 03.82 (P4C01)

## ANNEX TO THE EUROPEAN SEARCH REPORT
## ON EUROPEAN PATENT APPLICATION NO.

EP 24 19 9882

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2025

| Patent document cited in search report | | Publication date | Patent family member(s) | | Publication date |
|---|---|---|---|---|---|
| US 2013188397 | A1 | 25-07-2013 | BR | 112014018151 A2 | 20-06-2017 |
| | | | CN | 104205263 A | 10-12-2014 |
| | | | CN | 104205264 A | 10-12-2014 |
| | | | EP | 2807662 A1 | 03-12-2014 |
| | | | EP | 2807663 A1 | 03-12-2014 |
| | | | JP | 6114310 B2 | 12-04-2017 |
| | | | JP | 2015510749 A | 09-04-2015 |
| | | | JP | 2015511479 A | 16-04-2015 |
| | | | KR | 20140117596 A | 07-10-2014 |
| | | | MX | 338023 B | 31-03-2016 |
| | | | US | 2013188397 A1 | 25-07-2013 |
| | | | US | 2013207468 A1 | 15-08-2013 |
| | | | US | 2013207601 A1 | 15-08-2013 |
| | | | WO | 2013112609 A1 | 01-08-2013 |
| | | | WO | 2013112613 A1 | 01-08-2013 |
| | | | WO | 2013112614 A1 | 01-08-2013 |
| CN 116707328 | A | 05-09-2023 | NONE | | |
| US 2008298087 | A1 | 04-12-2008 | EP | 1998432 A2 | 03-12-2008 |
| | | | US | 2008298087 A1 | 04-12-2008 |
| US 2023198393 | A1 | 22-06-2023 | CN | 116266739 A | 20-06-2023 |
| | | | DE | 102022130364 A1 | 22-06-2023 |
| | | | US | 2023198393 A1 | 22-06-2023 |

EPO FORM P0459

**REFERENCES CITED IN THE DESCRIPTION**

**Patent documents cited in the description**

- US 8933594 B
- US 9561730 B
- US 9561730 B2
- US 48683023